# EUROPEAN PATENT APPLICATION

(11) **EP 3 827 678 A1**
(43) Date of publication of application: **02.06.2021**
(21) Application number: 18927490.5
(22) Date of filing: 23.07.2018
(51) Int. Cl.: A24F 47/00, G05D 23/20

(54) **METHOD FOR CONTROLLING TEMPERATURE OF HEAT-GENERATING COMPONENT OF ELECTRICALLY HEATED VAPOR-GENERATING SYSTEM AND ELECTRICALLY HEATED VAPOR-GENERATING SYSTEM**

(71) Applicant: China Tabacco Hubei Industrial Corporation Limited, Wuhan, Hubei 430040 (CN)
(72) Inventor: LIU, Huachen, Wuhan, Hubei 430040 (CN); LI, Dan, Wuhan, Hubei 430040 (CN); CHEN, Yikun, Wuhan, Hubei 430040 (CN); HU, Tengfei, Wuhan, Hubei 430040 (CN); DONG, Aijun, Wuhan, Hubei 430040 (CN)
(74) Representative: Cochonneau, Olivier
(86) International application number: PCT/CN2018/096671
(87) International publication number: WO 2020/019123

(57) **Abstract**

Disclosed are a method for controlling the temperature of a heating apparatus in an electrically-heated smoking system and an electrically-heated smoking system, the method comprises: providing a constant or variable preset temperature value; outputting a constant current to a heating apparatus by a constant current source; and controlling an actual temperature of the heating apparatus to be maintained at a preset temperature, wherein the temperature control step comprises: obtaining a voltage value corresponding to the constant current at the two ends of the electrical heating apparatus; deriving an actual temperature value of the heating apparatus according to the voltage value; comparing the actual temperature value of the heating apparatus with a preset temperature; and maintaining the actual temperature value of the heating apparatus at a preset temperature by adjusting a heating power supply.

## Description

### FIELD OF THE INVENTION

The present disclosure relates to the field of novel tobacco technologies, and in particular, to a method for controlling the temperature of a heating apparatus in an electrically-heated smoking system and an electrically-heated smoking system.

### BACKGROUND OF THE INVENTION

The heating apparatus in an electrically-heated smoking appliance is the key part of the whole appliance. Controlling of the temperature of the heating apparatus in the heating non-burning electrically-heated smoking appliance is of great significance in reducing the volatilization of harmful substances during heating the tobacco tar and the low-temperature cigarette tobacco, enhancing the user experience of the electrically-heated smoking appliance, cleaning the heating element and prolonging the lifetime of the electrically-heated smoking appliance, etc.

At present, the temperature control methods of the heating apparatus in the electrically-heated smoking system mainly include: directly adjusting the voltage value at the two ends of the heating apparatus, inputting the current value of the heating apparatus or outputting power of the heating apparatus, thereby controlling the temperature of the heating apparatus; detecting the resistivity of the heating apparatus, and controlling the temperature of the heating apparatus according to the correspondence between the resistivity and the temperature, thereby controlling the temperature of the heating apparatus, etc..

For the temperature control methods of the heating apparatus by directly controlling the voltage value at the two ends of the heating apparatus and the input current value or by controlling the power output of the heating apparatus, the temperature of the heating apparatus cannot be accurately controlled, because the temperature of the heating apparatus and the temperature fluctuation ratio thereof cannot be accurately mastered, especially after the heating apparatus contacts an object to be heated, the specific gravity, heat capacity, volume and consuming behavior of the heating object will affect the temperature of the heating apparatus, thereby causing a deviation to the preset temperature control program.

For the detection of the resistivity of the heating apparatus, the temperature of the heating apparatus is controlled according to the relationship between the resistivity and the temperature. This method is greatly affected by the stability of the resistance of the heating element. Due to the constant aging of the heating element, the relationship between the resistivity and the temperature has a deviation, which may lead to distortion of temperature control and cannot accurately control the temperature of the heating apparatus.

### SUMMARY OF THE INVENTION

Therefore, it is an object of the present disclosure to overcome the above defects, i.e., the technical problems of the existing method for controlling the temperature of a heating apparatus in an electrically-heated smoking system that the temperature of the heating apparatus cannot be controlled accurately.

In a first aspect, the disclosure provides a method for controlling the temperature of a heating apparatus in an electrically-heated smoking system. The electrically-heated smoking system includes: a constant current source, a power supply for supplying electric power to a heating apparatus, and a heating apparatus connected with the power supply. The method for controlling the heating apparatus according to the disclosure includes: providing a preset temperature value, which may be a constant or may change over time; outputting, by the constant current source, a constant current I₀ to the heating apparatus; and controlling an actual temperature of the heating apparatus to be maintained at a preset temperature, which includes the steps of:
S1: determining a voltage value U₀ corresponding to the constant current I₀ at the two ends of the heating apparatus;
S2: deriving an actual temperature value T of the heating apparatus according to the voltage value U₀ corresponding to the constant current at the two ends of the heating apparatus;
S3: comparing the actual temperature value T of the heating apparatus with a preset temperature; and
S4: adjusting an electric power provided to the heating apparatus to maintain the actual temperature value T of the heating apparatus at the preset temperature.

Preferably, the numerical value of the constant current I₀ is no larger than 50mA.

Optionally, the deriving the actual temperature value of the heating apparatus includes retrieving the temperature value from a correspondence table between the voltage value U₀ corresponding to the constant current at the two ends of the heating apparatus and the actual temperature value of the heating apparatus, or obtaining the actual temperature value of the heating apparatus according to a function relation formula between the actual temperature of the heating apparatus and the voltage value U₀ corresponding to the constant current at the two ends of the heating apparatus.

Preferably, a function relation formula between the actual temperature of the heating apparatus and the voltage value U₀ corresponding to the constant current at the two ends of the heating apparatus is T=a^{∗}U₀+b, where T is the temperature of the heating apparatus, U₀ is the voltage corresponding to the constant current source, and a, b are constants related to a specific heating apparatus. Further, the parameter a is l/(c^{∗}I₀), and the parameter b is R₀/c, where the parameter c is a resistance temperature coefficient of a specific heating apparatus, and R₀ is an initial resistance of a specific heating apparatus.

Optionally, the preset temperature value may be set constant or may be set to change over time, and preferably, the preset temperature value is set to change over time and has a temperature curve that changes over time.

Preferably, the preset temperature curve of the heating apparatus includes three stages: the first stage is a stage in which the temperature of the heating apparatus rises from an initial temperature to a maximum temperature; the second stage is a stage in which the temperature of the heating apparatus decreases from the maximum temperature to a working temperature; and the third stage is a stage in which the temperature of the heating apparatus keeps at the working temperature.

Preferably, the maximum temperature is between 350 to 450°C, and the working temperature is between 280 to 380°C.

Preferably, the duration of the first stage is 1-25s, the duration of the second stage is 1-25s, and the duration of the third stage is 120-600s.

Preferably, the control method and control steps are repeated during the heating process of the heating apparatus of electrically-heated smoking system so as to adjust the actual working temperature of the heating apparatus and maintain it at the preset temperature.

Preferably, the control steps according to the disclosure are executed at a frequency of about 50Hz-9000Hz during the power supplying process.

In a second aspect, the disclosure provides an electrically-heated smoking system, which includes a heating apparatus, a constant current source, a detection module, a temperature derivation module, a central control chip and a power controller.

The heating apparatus according to the disclosure is configured for heating a smoke-forming matrix in various forms, for example, tobacco and tobacco tar. Optionally, the heating apparatus may have any suitable number and form. For example, the number of the heating apparatus may be more than one, and the suitable shape includes, but is not limited to, needle, splinter and taper.

The constant current source according to the disclosure is configured for outputting a constant current to the heating apparatus.

The detection module according to the disclosure is configured for determining a voltage U₀ corresponding to the constant current at the two ends of the heating apparatus according to the constant current input, and feeding back the value to the temperature derivation module.

The temperature derivation module according to the disclosure is configured for receiving the voltage value corresponding to the constant current at the two ends of the heating apparatus, and deriving the actual temperature of the heating element, and feeding back the actual temperature value to the central control chip.

Optionally, the detection module and/or the temperature derivation module may be independent from the central control chip, or may be partially or entirely integrated in the central control chip.

Optionally, a correspondence table between the voltage value U₀ corresponding to the constant current at the two ends of the heating apparatus and the actual temperature value of the heating apparatus or a correspondence function formula between the voltage value U₀ corresponding to the constant current at the two ends of the heating apparatus and the actual temperature value of the heating apparatus is stored on the temperature derivation module.

Preferably, a function relation formula between the actual temperature of the heating apparatus and the voltage value U₀ corresponding to the constant current at the two ends of the heating apparatus is T=a^{∗}U₀+b, where T is the temperature of the heating apparatus, U₀ is the voltage corresponding to the constant current source, and a, b are constants related to a specific heating apparatus. Further, the parameter a is l/(C^{∗}I₀), and the parameter b is Ro/c, wherein the parameter c is a resistance temperature coefficient of a specific heating apparatus, and Ro is an initial resistance of a specific heating apparatus.

The central control chip according to the disclosure is configured for: controlling the constant current source to output a constant current to the heating apparatus and in real time detect and control the signal fed back by the constant current source; receiving the actual temperature value of the heating apparatus from the temperature derivation module, and comparing the actual temperature value of the heating apparatus with a preset temperature value; and controlling the power controller. Optionally, the central control chip may employ any suitable form that is common in the art.

A preset temperature value is stored in the central control chip. Optionally, the preset temperature value may be set constant or may be set to change over time, and preferably, the preset temperature value is set to change over time and have a temperature curve that changes over time. Further, the duration and related temperature value of each stage in the temperature curve are stored in the central control chip.

Preferably, the temperature curve includes three stages: the first stage is a stage in which the temperature of the heating apparatus rises from an initial temperature to a maximum temperature; the second stage is a stage in which the temperature of the heating apparatus decreases from the maximum temperature to a working temperature; and the third stage is a stage in which the temperature of the heating apparatus keeps at the working temperature.

Preferably, the maximum temperature is between 350 to 450°C, the working temperature is between 280 to 380°C, the duration of the first stage is 1-25s, the duration of the second stage is 1-25s, and the duration of the third stage is 120-600s.

Preferably, a plurality of preset temperature values are stored on the central control chip to be easily selected by a consumer.

The power controller according to the disclosure is configured for adjusting an electric power provided to the heating apparatus so as to maintain the actual temperature value of the heating apparatus at a preset temperature.

In the first aspect and the second aspect of the disclosure, the heating apparatus may include any suitable resistance material. The suitable resistance material includes, but is not limited to: cermet heater, conductive ceramic, nickel-containing alloy, cobalt-containing alloy, chrome-containing alloy, aluminium-containing alloy, titanium-containing alloy, zirconium-containing alloy, hafnium-containing alloy, columbium-containing alloy, molybdenum-containing alloy, tantalum-containing alloy, tungsten-containing alloy, tin-containing alloy, gallium-containing alloy, manganese-containing alloy and iron-containing alloy. Preferably, the resistance material included in the heating apparatus includes tungsten, manganese and an additive, and the additive is at least one selected from molybdenum, ruthenium, tellurium, germanium and vanadium.

In conclusion, in the disclosure, a constant current source is added to the control circuit, and the constant current source can output a constant current to the heating apparatus. A unique actual working temperature value is obtained according to the correspondence between the actual working temperature of the specific heating apparatus and the above voltage by determining the voltage corresponding to the constant current at the two ends of the heating apparatus, so that the electric power provided by the power supply may be adjusted according to the comparison result with the preset temperature, thereby controlling and finally maintaining the actual working temperature of the heating apparatus at the preset temperature. When the disclosure is applied to the field of novel tobacco technologies, the temperature of the heating apparatus may be accurately controlled according to a preset temperature, and the control precision can be greatly improved, so that volatilization of harmful substances in the tobacco may be controlled, and a user of the electrically-heated smoking system can obtain a stable suction taste and a good suction experience, thereby prolonging the lifetime of the electrically-heated smoking system.

### BRIEF DESCRIPTION OF THE DRAWINGS

The drawings are provided for further understanding the disclosure and form a part of the disclosure, and the drawings are used for explaining the disclosure in conjunction with the specific embodiments below, rather than limiting the disclosure. In the drawings:
Fig.1 is a schematic diagram illustrating a method for controlling the temperature of a heating apparatus according to an embodiment of the present disclosure; and
Fig.2 is a temperature change curve illustrating preset temperature values stored in a central control chip according to an embodiment of the present disclosure.

### DETAILED DESCRIPTION OF THE EMBODIMENTS

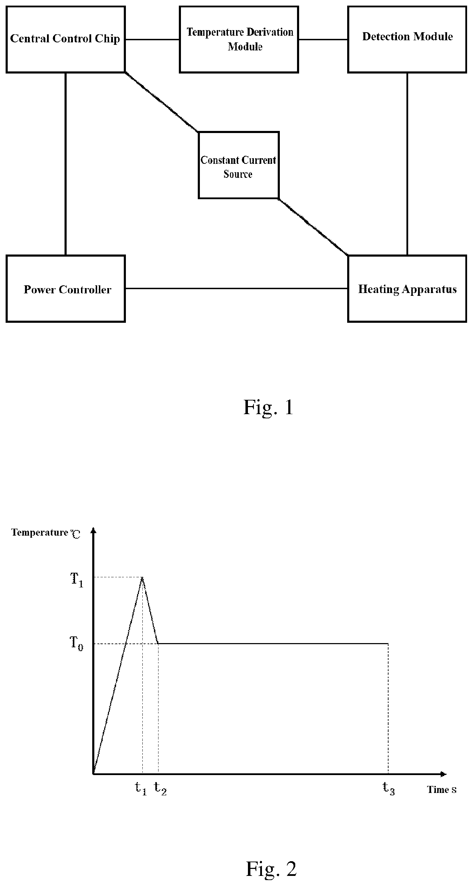

Fig.1 shows a schematic diagram of a method for controlling the temperature of a heating apparatus and an electrically-heated smoking system according to an embodiment of the disclosure. In the embodiment, the electrically-heated smoking system includes: a central control chip, a constant current source, a heating apparatus, a detection module, a temperature derivation module and a power controller. Wherein, the central control chip controls the constant current source to output a constant current I₀ to a heating apparatus and in real time detect and control the signal fed back by the constant current source, thereby controlling the constant current source to work stably. The detection module determines a voltage U₀ corresponding to the above constant current I₀ at the two ends of the heating apparatus in real time according to U₀=I₀^{∗}R in accordance with the constant current input, and feeds back the value of voltage U₀ to the temperature derivation module. The temperature derivation module calculates the actual temperature of the heating apparatus at this moment according to function relation formula T=a^{∗}U₀+b. Wherein, R is the real-time resistance of the heating apparatus, T is the temperature of the heating apparatus, and U₀ is the voltage corresponding to the constant current I₀, and a, b are constants related to a specific heating apparatus. Further, the parameter a is l/(C^{∗}I₀), and the parameter b is Ro/c, wherein, the parameter c is a resistance temperature coefficient of a specific heating apparatus, R₀ is the initial resistance of a specific heating apparatus. In one embodiment, the constant current I₀ is set as 10mA, the resistance temperature coefficient of the specific heating apparatus is 4000ppm/°C, and the initial resistance is 1 ohm.

The temperature derivation module feeds back the actual temperature of the heating apparatus to the central control chip in real time, and the central control chip compares the actual temperature of the heating apparatus at this moment with the preset temperature at this moment stored inside, if the former is greater than the latter, the central control chip lowers the electric power output of the power supply by controlling the power controller, so as to lower the temperature of the heating apparatus; if the former is smaller than the latter, the central control chip increases the electric power output of the power supply by controlling the power controller, so as to rise the temperature of the heating apparatus. By repeating the above control method and steps, the actual working temperature of the heating apparatus may be controlled and maintained at the preset temperature.

Fig.2 shows a temperature change curve of preset temperature values stored in a central control chip according to an embodiment. In the first stage, the temperature of the heating apparatus rises within time t₁ from the initial temperature to the maximum temperature T₁, wherein t₁ is in the range of 1-25s, and the maximum temperature T₁ is in the range of 350-450°C. In the second stage, the temperature of the heating apparatus decreases from the maximum temperature to the working temperature T₀ in time t₂, wherein t₂ is in the range of 1-25s, the working temperature T₀ is in the range of 280-380°C and is lower than the maximum temperature T₁. In the third stage, the temperature of the heating apparatus is maintained at the working temperature T₀ in time t₃ till the end of power supplying, and t₃ is in the range of 120-600s.

In one embodiment, t1 is set as 17s, the maximum temperature T₁ is set as 390°C, t₂ is set as 3s, the working temperature T₀ is set as 360°C, and t₃ is set as 250s.

Preferred embodiments have been described in detail above. However, the disclosure is not limited to the specific details of the above embodiments, and within the technical concept of the disclosure, various simple variations may be made to the technical solutions of the disclosure, and all these variations pertain to the protection scope of the disclosure.

Additionally, it should be noted that, in the case of no conflict, each specific technical feature described in the above specific embodiments may be combined in any appropriate manner, and in order to avoid unnecessary repetition, said various possible combinations will not be further illustrated in the disclosure.

## Claims

1. A method for controlling the temperature of a heating apparatus in an electrically-heated smoking system, wherein, the electrically-heated smoking system comprises: a constant current source, a power supply for supplying electric power to a heating apparatus, and a heating apparatus connected with the power supply, and the method comprises:
providing a preset temperature value, which may be a constant or may change over time;
outputting, by the constant current source, a constant current I₀ to the heating apparatus; and
controlling an actual temperature of the heating apparatus to be maintained at a preset temperature, which comprises the steps of:
S1: determining a voltage value U₀ corresponding to the constant current I₀ at the two ends of the heating apparatus;
S2: determining an actual temperature value T of the heating apparatus according to the voltage value U₀ corresponding to the constant current at the two ends of the heating apparatus;
S3: comparing the actual temperature value T of the heating apparatus with a preset temperature; and
S4: adjusting an electric power provided to the heating apparatus to maintain the actual temperature value T of the heating apparatus at the preset temperature.

2. The method of claim 1, wherein, a numerical value of the constant current I₀ is no larger than 50mA.

3. The method of claim 1 or 2, wherein, the value of the actual temperature is derived in one of the two modes below:
retrieving the temperature value from a correspondence table between the voltage value U₀ corresponding to the constant current at the two ends of the heating apparatus and the actual temperature value of the heating apparatus; and
obtaining the actual temperature value of the heating apparatus according to a function relation formula between the actual temperature of the heating apparatus and the voltage value U0 corresponding to the constant current at the two ends of the heating apparatus.

4. The method of claim 3, wherein, the function relation formula is T=a^{∗}U₀+b, wherein, T is the temperature of the heating apparatus, U₀ is the voltage corresponding to the constant current source, and a and b are parameters related to a specific heating element.

5. The method of claim 4, wherein, the parameter a is l/(c^{∗}10), and the parameter b is R₀/c, wherein, c is a resistance temperature coefficient of a specific heating apparatus, and R₀ is an initial resistance of a specific heating apparatus.

6. The method of any one of claims 1-5, wherein, the preset temperature value has a temperature curve that changes over time.

7. The method of claim 6, wherein, the temperature curve comprises three stages: the first stage is a stage in which the temperature of the heating apparatus rises from an initial temperature to a maximum temperature; the second stage is a stage in which the temperature of the heating apparatus decreases from the maximum temperature to a working temperature; and the third stage is a stage in which the temperature of the heating apparatus keeps at the working temperature.

8. The method of claim 7, wherein, the maximum temperature is between 350 to 450°C, and the working temperature is between 280 to 380°C.

9. The method of any one of claims 7-8, wherein, the duration of the first stage is 1-25s, the duration of the second stage is 1-25s, and the duration of the third stage is 120-600s.

10. An electrically-heated smoking system, comprising:
a heating apparatus;
a constant current source, configured for outputting a constant current I₀ to a heating apparatus;
a detection module, configured for determining a voltage U₀ corresponding to the constant current at the two ends of the heating apparatus and feeding back the value to a temperature derivation module;
a temperature derivation module, configured for receiving a value of the voltage U0 corresponding to the constant current at the two ends of the heating apparatus and deriving the actual temperature of the heating element, and feeding back the actual temperature value to a central control chip;
a central control chip, configured for: controlling the constant current source to output a constant current to the heating apparatus and in real time detect and control the signal fed back by the constant current source; and receiving the actual temperature value of the heating apparatus from the temperature derivation module and comparing the actual temperature value of the heating apparatus with a preset temperature value; and controlling a power controller;
a power controller, configured for adjusting an electric power provided to the heating apparatus to maintain the actual temperature value of the heating apparatus at a preset temperature.

11. The system of claim 10, wherein, a correspondence table between the voltage value U₀ corresponding to the constant current at the two ends of the heating apparatus and the actual temperature value of the heating apparatus or a correspondence function formula between the voltage value U₀ corresponding to the constant current at the two ends of the heating apparatus and the actual temperature value of the heating apparatus is stored in the temperature derivation module.

12. The system of claim 11, wherein, the function relation formula is T=a^{∗}U₀+b, wherein, T is the temperature of the heating apparatus, U₀ is the voltage corresponding to the constant current source, and a and b are parameters related to a specific heating element.

13. The system of claim 12, wherein, the parameter a is l/(C^{∗}I₀), and the parameter b is Ro/c, wherein, c is a resistance temperature coefficient of a specific heating apparatus, and Ro is an initial resistance of a specific heating apparatus.

14. The system of any one of claims 10-13, wherein, a preset temperature value is stored in the central control chip, and the preset temperature value may be a constant or may change over time.

15. The system of claim 14, wherein, the preset temperature value has a temperature curve that changes over time.

16. The system of claim 15, wherein, the temperature curve comprises three stages: the first stage is a stage in which the temperature of the heating apparatus rises from an initial temperature to a maximum temperature; the second stage is a stage in which the temperature of the heating apparatus decreases from the maximum temperature to a working temperature; and the third stage is a stage in which the temperature of the heating apparatus keeps at the working temperature.

17. The system of claim 16, wherein, the maximum temperature is between 350 to 450°C, and the working temperature is between 280 to 380°C.

18. The system of any one of claims 16-17, wherein, the duration of the first stage is 1-25s, the duration of the second stage is 1-25s, and the duration of the third stage is 120-600s.
